# EUROPEAN PATENT SPECIFICATION

(11) **EP 4 393 760 B1**
(45) Date of publication and mention of the grant of the patent: **06.08.2025**
(21) Application number: 23220342.2
(22) Date of filing: 27.12.2023
(51) Int. Cl.: B60L 53/18, B60L 53/31

(54) **CHARGING CONNECTOR AND CHARGING PILE**
LADESTECKER UND LADESÄULE
CONNECTEUR DE CHARGE ET PILE DE CHARGE

(30) Priority: 29.12.2022 CN 202211705503
(43) Date of publication of application: 03.07.2024
(73) Proprietor: Huawei Digital Power Technologies Co., Ltd., Shenzhen, 518043 (CN)
(72) Inventor: LI, Wenkang, Shenzhen, 518043 (CN); LIAN, Zhisheng, Shenzhen, 518043 (CN); HU, Minggui, Shenzhen, 518043 (CN)
(74) Representative: Epping - Hermann - Fischer

(56) References cited:
- EP-A2- 4 068 527
- US-A1- 2019 016 220

## Description

### TECHNICAL FIELD

This application relates to the field of charging device technologies, and in particular, to a charging connector and a charging pile.

### BACKGROUND

With rapid development of the new energy vehicle industry, a range-per-charge of an electric vehicle continuously increases, and a battery capacity also increases accordingly. Therefore, a problem of a charging speed needs to be resolved by increasing charging power to implement fast charging. However, a higher requirement is also imposed on heat dissipation of a charging connector.

Currently, a liquid cooling technology is usually used to perform heat dissipation processing on the charging connector. In a process of charging the electric vehicle, a wire cable of the charging connector may be crushed by a vehicle tire, and a circulation pipe in the charging connector is vulnerable to being damaged. Consequently, a cooling working medium in the circulation pipe leaks, and the charging wire cable is damaged, causing a series of security problems. Therefore, how to provide a charging connector to improve security and reliability of the charging connector in a charging process has become a technical problem that needs to be urgently resolved in the art.

EP 4068527 A2 describes an electric vehicle charging assembly comprising: an electric vehicle charging cable comprising: a grounding unit; at least one communication unit; a pair of power units each including a conductor and an insulating layer covering the conductor; a cooling unit configured to cool the conductor and included in the conductor of each of the power units, the cooling unit including a cooling tube and a cooling channel which is provided in the cooling tube and in which a cooling fluid flows; and a collection unit including a collection tube in which a return channel is provided to collect the cooling fluid supplied through the cooling unit; and an electric vehicle charging connector comprising: a pair of power terminals each including a connecting part to be connected to a connector connection unit included in an electric vehicle and a conductor connection part into which the conductor of the electric vehicle charging cable is inserted to be connected to the connector connection unit; and a heat sink configured to absorb heat generated in the conductor connection part of each of the power terminals, and including therein a return channel for collecting the cooling fluid flowing through the cooling unit and supplying the cooling fluid to the collection unit.

### SUMMARY

The invention is set out in the appended set of claims.

Embodiments of this application provide a charging connector and a charging pile, to improve security and reliability of the charging connector.

According to a first aspect, a charging connector is provided. The charging connector includes a charging terminal, a cable, a circulation pipe, and a hydraulic buffer apparatus. The charging terminal is connected to the cable. The circulation pipe is configured to communicate with a cold source apparatus to form a cooling loop. The hydraulic buffer apparatus communicates with the circulation pipe. The hydraulic buffer apparatus is configured to relieve pressure in the circulation pipe when the pressure in the circulation pipe is greater than a preset threshold.

According to the charging connector provided in this application, the hydraulic buffer apparatus is disposed in the charging connector. When the pressure in the circulation pipe in the charging connector is greater than the preset threshold, a fluid flowing into the hydraulic buffer apparatus buffers the circulation pipe, to reduce damage to the circulation pipe caused by excessively high pressure in the circulation pipe or adverse impact of fluid leakage in the circulation pipe on the inside of a wire cable, to improve security and reliability of the charging connector.

With reference to the first aspect, in a possible implementation of the first aspect, the circulation pipe includes an inflow pipe and an outflow pipe; and the inflow pipe communicates with the hydraulic buffer apparatus, or the outflow pipe communicates with the hydraulic buffer apparatus, or both the inflow pipe and the outflow pipe communicate with the hydraulic buffer apparatus. When the pressure in the circulation pipe in the charging connector is greater than the preset threshold, the fluid flowing into the hydraulic buffer apparatus through the inflow pipe or the outflow pipe or the inflow pipe and the outflow pipe buffers the circulation pipe, to reduce damage to the circulation pipe caused by excessively high pressure in the circulation pipe or adverse impact of fluid leakage in the circulation pipe on the inside of the wire cable, to improve security and reliability of the charging connector.

With reference to the first aspect, in a possible implementation of the first aspect, the charging connector further includes a heat exchange pool, the heat exchange pool is attached to the charging terminal, and the heat exchange pool is connected to the circulation pipe. The heat exchange pool is disposed in the charging connector, the heat exchange pool is attached to the charging terminal, and the heat exchange pool is connected to the circulation pipe, so that heat dissipation effect of the charging terminal can be improved.

With reference to the first aspect, in a possible implementation of the first aspect, the heat exchange pool is connected to the hydraulic buffer apparatus. In this way, when the pressure in the circulation pipe is greater than the preset threshold, the fluid flowing into the hydraulic buffer apparatus from the heat exchange pool buffers the circulation pipe, to reduce damage to the circulation pipe caused by excessively high pressure in the circulation pipe or adverse impact of fluid leakage in the circulation pipe on the inside of the wire cable, to improve security and reliability of the charging connector in a charging process. In addition, the structure is simple, and is convenient for processing and assembly of the charging connector.

With reference to the first aspect, in a possible implementation of the first aspect, a three-way adapter is disposed in the inflow pipe and/or the outflow pipe, a first end of the three-way adapter communicates with the heat exchange pool, a second end of the three-way adapter communicates with the cold source apparatus, and a third end of the three-way adapter communicates with the hydraulic buffer apparatus.

According to the charging connector provided in this application, the three-way adapter is disposed in the inflow pipe and/or the outflow pipe in the circulation pipe to communicate with the hydraulic buffer apparatus, so that when the pressure in the circulation pipe is greater than the preset threshold, the fluid flowing into the hydraulic buffer apparatus may buffer the circulation pipe, to reduce damage to the circulation pipe caused by excessively high pressure in the circulation pipe or adverse impact of fluid leakage in the circulation pipe on the inside of the wire cable, to improve security and reliability of the charging connector in the charging process. In addition, the structure design is simple, and there is no need to affect the structure of the heat exchange pool.

With reference to the first aspect, in a possible implementation of the first aspect, at least one liquid inlet and at least one liquid outlet are disposed on a side that is of the heat exchange pool and that is away from the charging terminal, the at least one liquid inlet is in a one-to-one correspondence with at least one inflow pipe, and the at least one liquid outlet is in a one-to-one correspondence with at least one outflow pipe. In this way, the at least one liquid inlet and the at least one liquid outlet are disposed on the side that is of the heat exchange pool and that is away from the charging terminal. Correspondingly, the at least one inflow pipe and the at least one outflow pipe need to be disposed in the circulation pipe, the at least one liquid inlet is in a one-to-one correspondence with the at least one inflow pipe, and the at least one liquid outlet is in a one-to-one correspondence with the at least one outflow pipe. Therefore, heat exchange efficiency of the fluid in the circulation pipe may be improved, and heat dissipation effect of the charging terminal may be effectively improved.

With reference to the first aspect, in a possible implementation of the first aspect, the hydraulic buffer apparatus includes a piston and a housing having an opening, the housing includes a first cavity and a second cavity, the piston is disposed in the housing and is located between the first cavity and the second cavity, a fluid in the circulation pipe enters the first cavity through the opening, and the fluid pushes the piston to compress the second cavity when the pressure in the circulation pipe is greater than the preset threshold. In this way, the fluid flowing into the first cavity in the hydraulic buffer apparatus pushes the piston to compress the second cavity when the pressure in the circulation pipe is greater than the preset threshold, to buffer the circulation pipe, to reduce damage to the circulation pipe caused by excessively high pressure in the circulation pipe or adverse impact of fluid leakage in the circulation pipe on the inside of the wire cable.

With reference to the first aspect, in a possible implementation of the first aspect, the hydraulic buffer apparatus further includes a retractable corrugated structure, and the corrugated structure is disposed between the opening and the piston to form the first cavity. In this application, the retractable corrugated structure is disposed in the hydraulic buffer apparatus, and the corrugated structure forms the first cavity between the opening of the housing and the piston, to improve sealing effect of the first cavity and prevent a fluid in the first cavity from entering the second cavity.

With reference to the first aspect, in a possible implementation of the first aspect, an elastic component is disposed in the second cavity, and the elastic component is connected to the piston and a wall that is of the housing and that is opposite to the piston. In this application, when the wire cable of the charging connector is crushed by a vehicle, that is, when the pressure in the circulation pipe is greater than the preset threshold, the hydraulic buffer apparatus may implement buffering on the fluid in the circulation pipe, to reduce damage to the circulation pipe or fluid leakage in the circulation pipe. Then, when the vehicle leaves the wire cable of the charging connector, that is, when the pressure in the circulation pipe is less than the preset threshold, because of elasticity of the elastic component disposed in the second cavity in the hydraulic buffer apparatus, the pressure in the circulation pipe may be restored to normal. This facilitates cyclic use of the hydraulic buffer apparatus, and helps improve security and reliability of the charging connector in the charging process.

With reference to the first aspect, in a possible implementation of the first aspect, the hydraulic buffer apparatus further includes a connection pipe, and the connection pipe is connected to the opening and the circulation pipe.

With reference to the first aspect, in a possible implementation of the first aspect, a shape of the housing is a square structure. In this application, the hydraulic buffer apparatus is disposed as a square structure, and may be stacked above the heat exchange pool, so that the hydraulic buffer apparatus is installed in the heat exchange connector, and space utilization inside a connector of the charging connector may be improved.

With reference to the first aspect, in a possible implementation of the first aspect, the charging connector further includes a pump body, the pump body communicates with the circulation pipe, and the pump body is configured to drive the fluid to flow in the circulation pipe, to improve heat exchange efficiency of the fluid in the circulation pipe, and improve heat dissipation effect of the charging terminal.

According to a second aspect, a charging pile is provided. The charging pile includes a pile body and a charging connector. The charging connector is electrically connected to the pile body through a cable. The charging connector includes a charging terminal, the cable, a circulation pipe, and a hydraulic buffer apparatus. The charging terminal is connected to the cable. The circulation pipe is configured to communicate with a cold source apparatus to form a cooling loop. The hydraulic buffer apparatus communicates with the circulation pipe. The hydraulic buffer apparatus is configured to relieve pressure in the circulation pipe when the pressure in the circulation pipe is greater than a preset threshold.

According to the charging pile provided in this application, the hydraulic buffer apparatus is disposed in the charging connector in the charging pile. When the pressure in the circulation pipe in the charging connector is greater than the preset threshold, a fluid flowing into the hydraulic buffer apparatus buffers the circulation pipe, to reduce damage to the circulation pipe caused by excessively high pressure in the circulation pipe or adverse impact of fluid leakage in the circulation pipe on the inside of a wire cable, to improve security and reliability of the charging pile.

With reference to the second aspect, in a possible implementation of the second aspect, the circulation pipe includes an inflow pipe and an outflow pipe; and the inflow pipe communicates with the hydraulic buffer apparatus, or the outflow pipe communicates with the hydraulic buffer apparatus, or both the inflow pipe and the outflow pipe communicate with the hydraulic buffer apparatus.

Therefore, when the pressure in the circulation pipe in the charging connector in the charging pile is greater than the preset threshold, the fluid flowing into the hydraulic buffer apparatus through the inflow pipe or the outflow pipe or the inflow pipe and the outflow pipe buffers the circulation pipe, to reduce damage to the circulation pipe caused by excessively high pressure in the circulation pipe or adverse impact of fluid leakage in the circulation pipe on the inside of the wire cable, to improve security and reliability of the charging pile.

With reference to the second aspect, in a possible implementation of the second aspect, the charging pile further includes a heat exchange pool, the heat exchange pool is attached to the charging terminal, and the heat exchange pool is connected to the circulation pipe. The heat exchange pool is disposed in the charging pile, the heat exchange pool is attached to the charging terminal of the charging connector, and the heat exchange pool is connected to the circulation pipe, so that heat dissipation effect of the charging terminal can be improved.

With reference to the second aspect, in a possible implementation of the second aspect, the heat exchange pool is connected to the hydraulic buffer apparatus. In this way, when the pressure in the circulation pipe in the charging connector is greater than the preset threshold, the fluid flowing into the hydraulic buffer apparatus from the heat exchange pool buffers the circulation pipe, to reduce damage to the circulation pipe caused by excessively high pressure in the circulation pipe or adverse impact of fluid leakage in the circulation pipe on the inside of the wire cable, to improve security and reliability of the charging pile in a charging process.

### BRIEF DESCRIPTION OF DRAWINGS

FIG. 1 is a schematic diagram of an example of a structure of a charging pile according to an embodiment of this application;
FIG. 2 is a schematic diagram of an example of a structure of a hydraulic buffer apparatus according to an embodiment of this application;
FIG. 3 is a schematic exploded diagram of an example of a structure of a hydraulic buffer apparatus according to an embodiment of this application;
FIG. 4 is a schematic diagram of an example of a hydraulic buffer apparatus when a wire cable of a charging connector is not crushed according to an embodiment of this application;
FIG. 5 is a schematic diagram of an example of a structure of a hydraulic buffer apparatus when a wire cable of a charging connector is crushed according to an embodiment of this application;
FIG. 6 is a schematic diagram of an example of a structure in which a hydraulic buffer apparatus is disposed in a charging connector according to an embodiment of this application;
FIG. 7 is a schematic diagram of another example of a structure in which a hydraulic buffer apparatus is disposed in a charging connector according to an embodiment of this application;
FIG. 8 is a schematic diagram of still another example of a structure in which a hydraulic buffer apparatus is disposed in a charging connector according to an embodiment of this application; and
FIG. 9 is a schematic diagram of yet another example of a structure in which a hydraulic buffer apparatus is disposed in a charging connector according to an embodiment of this application.

It should be understood that, in embodiments of this application, the accompanying drawings are not drawn according to an actual scale.

### DESCRIPTION OF EMBODIMENTS

The following describes technical solutions in embodiments of this application in detail with reference to the accompanying drawings.

A charging connector is a device for implementing electric energy transmission between a charging device and an electric vehicle. Increasing a charging current in the charging connector may implement high-power charging, to meet a requirement of the electric vehicle for large-capacity fast charging. The increase of the charging current results in an increase in power consumption of the charging connector, and high heat is easily generated in a charging process. Currently, a liquid cooling technology is usually used to dissipate heat of the charging connector to reduce heat consumption. That is, a liquid cooling cycle system may be provided for the charging connector, so that a cooling liquid in the liquid cooling cycle system contacts a cable in a wire cable to perform heat exchange, to implement heat dissipation.

In some possible implementations, in a process of charging the electric vehicle, the wire cable of the charging connector is impacted by an external force (for example, being crushed by a vehicle tire), and consequently a cooling working medium in a circulation pipe in the wire cable separately diffuses to a side of a charging terminal of the charging connector and a side of a cold source apparatus of a pile body. For the side of the cold source apparatus of the pile body, the cooling working medium flowing to the cold source apparatus after being crushed by the vehicle tire is not easy to affect the cold source apparatus because of large accommodation pace of the cold source apparatus. However, for the side of the charging terminal of the charging connector, because the circulation pipe on the side has small space for accommodating the cooling working medium, the cooling working medium flowing to the side of the charging terminal of the charging connector after being crushed by the vehicle tire generates large pressure in the circulation pipe on the side in a short period of time, and is vulnerable to damaging the circulation pipe, causing leakage of the cooling working medium. Consequently, there is short circuit risk in the wire cable of the charging connector, and a security accident is vulnerable to being caused.

In view of this, embodiments of this application provide a charging connector and a charging pile, to resolve the foregoing technical problem, so that security and reliability of the charging connector in a charging process can be improved. To make the objectives, technical solutions, and beneficial effects of this application clearer, the following further describes this application in detail with reference to the accompanying drawings.

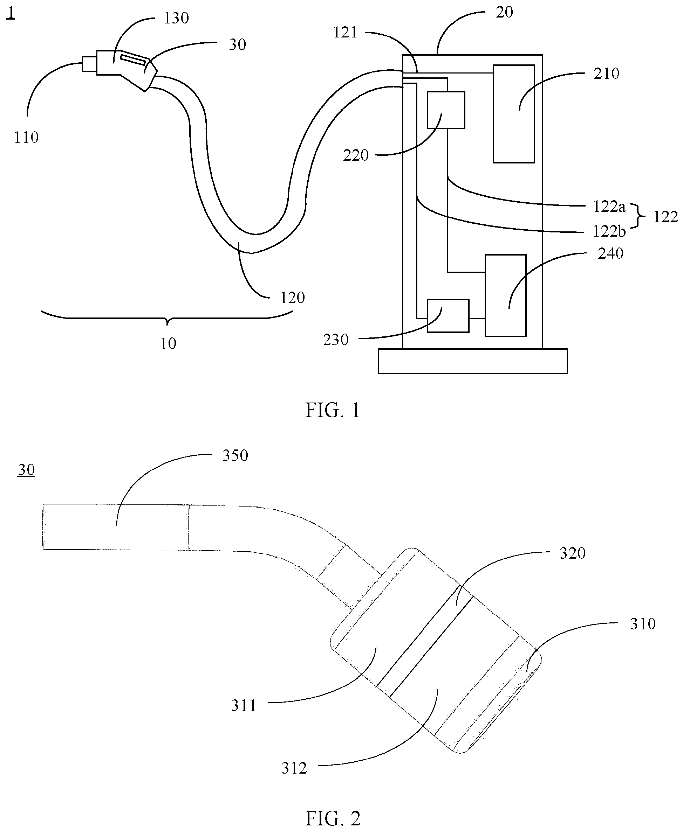

FIG. 1 is a schematic diagram of a structure of an example of a charging pile according to an embodiment of this application. As shown in FIG. 1, the charging pile 1 may include a charging connector 10 and a charging pile 20. The charging connector 10 is electrically connected to the charging pile 20, to charge, through the charging connector 10, an electric device by using electric energy stored in the charging pile 20. It should be understood that a plurality of charging connectors 10 may alternatively be disposed in the charging pile 1 in this embodiment of this application. As an example, this is not limited in this embodiment of this application.

In a possible implementation, the charging connector 10 in this embodiment of this application may include a charging terminal 110, a wire cable 120, and a connector housing 130. A cable 121 and a circulation pipe 122 are disposed in the wire cable 120. The circulation pipe 122 includes an inflow pipe 122a and an outflow pipe 122b. For example, one end of the inflow pipe 122a may be connected to a cold source apparatus 220 of the pile body 20, and one end of the outflow pipe 122b may be connected to a water pump 230 of the pile body 20.

It should be understood that quantities of charging terminals 110, inflow pipes 122a, and outflow pipes 122b in the charging connector 10 in this embodiment of this application may be set according to an actual requirement. For example, two charging terminals 100, two inflow pipes 122a, and one outflow pipe 122b may be disposed in the charging connector 10. As an example, this is not limited in this embodiment of this application.

In a possible implementation, an installation cavity is further disposed in the connector housing 130 of the charging connector 10 in this embodiment of this application, and a part of the charging terminal 110 may be fastened inside the installation cavity.

In a possible implementation, the charging terminal 110 in this embodiment of this application may be disposed in the charging connector 10 as a male end, to be connected to a charging socket, on the power-consuming device, that is used as a female end, or the charging terminal 110 may be disposed on the power-consuming device as a male end, to be connected to a charging socket, on the charging connector 10, that is used as a female end. As an example, this is not limited in this embodiment of this application.

In a possible implementation, the charging pile 20 in this embodiment of this application may include a power distribution apparatus 210, the cold source apparatus 220, the water pump 230, and a heat dissipation apparatus 240. The power distribution apparatus 210 can implement a power distribution function of the charging terminal. The cold source apparatus 220 is configured to store a cooling working medium. The water pump may be configured to provide a driving force for the cooling working medium in the cold source apparatus 220. The heat dissipation apparatus 240 is configured to cool the cooling working medium in the circulation pipe 122, to implement cyclic utilization of the cooling working medium. For example, the heat dissipation apparatus 240 in the charging pile 20 in this embodiment of this application may be an air-cooled radiator or a water-cooled radiator. As an example, this is not limited in this embodiment of this application.

It should be understood that another apparatus, for example, a monitoring apparatus, may alternatively be disposed in the charging pile 1 in this embodiment of this application according to an actual requirement, to monitor an electricity quantity change in the charging pile 1 and a water pressure change in the circulation pipe 122.

In a possible implementation, the charging pile 1 may alternatively be disposed as an integrated charging pile. To be specific, the charging pile 1 further includes a power module disposed inside the pile body 20, and the power module can implement a power supply conversion function of the integrated charging pile.

In a possible implementation, the charging connector 10 in this embodiment of this application further includes a hydraulic buffer apparatus 30. The hydraulic buffer apparatus 30 communicates with the circulation pipe 122, and the hydraulic buffer apparatus 30 is configured to relieve pressure in the circulation pipe 122 when the pressure in the circulation pipe 122 is greater than a preset threshold.

It should be understood that, in this embodiment of this application, the preset threshold may be set according to an actual requirement. For example, the preset threshold may be set based on a material characteristic of the circulation pipe 122 inside the wire cable 120 of the charging connector 10. As an example, this is not limited in this embodiment of this application.

Optionally, as shown in FIG. 1, a first end of the charging terminal 110 of the charging connector 10 is electrically connected to a first end of the cable 121, a second end of the charging terminal 110 may be connected to the power-consuming device (for example, an electric vehicle) to charge the power-consuming, and a second end of the cable 121 is electrically connected to the power distribution apparatus 210 of the pile body 20. The circulation pipe 122 is sequentially connected to the cold source apparatus 220, the water pump 230, and the radiator 240 to form a cooling loop, to implement heat dissipation processing on the charging terminal 110 and the cable 121 through convection heat exchange. The hydraulic buffer apparatus 30 may communicate with the circulation pipe 122 inside the connector housing 130, to relieve the pressure in the circulation pipe 122 when the pressure in the circulation pipe 122 is greater than the preset threshold, to ensure security and reliability of the charging connector 10 in a charging process.

The following describes in detail the hydraulic buffer apparatus 30 in embodiments of this application with reference to FIG. 2 to FIG. 5.

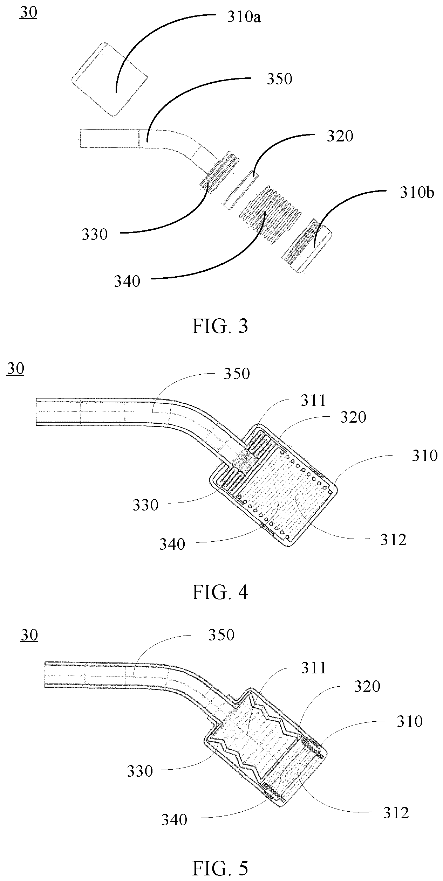

FIG. 2 is a schematic diagram of an example of a structure of a hydraulic buffer apparatus 30 according to an embodiment of this application. FIG. 3 is a schematic exploded diagram of an example of a structure of a hydraulic buffer apparatus 30 according to an embodiment of this application. For example, FIG. 3 may be a schematic exploded diagram of a structure of the hydraulic buffer apparatus 30 shown in FIG. 2.

As shown in FIG. 2 and FIG. 3, the hydraulic buffer apparatus 30 in this embodiment of this application may include a piston 320 and a housing 310 having an opening 310a. The housing 310 may include a first cavity 311 and a second cavity 312. The piston 320 is disposed in the housing 310 and is located between the first cavity 311 and the second cavity 312. A fluid in the circulation pipe 122 may enter the first cavity 311 through the opening 310a. The fluid flowing into the first cavity 311 may push the piston 320 to compress the second cavity 312 when pressure in the circulation pipe 122 is greater than a preset threshold, to reduce damage to the circulation pipe 122 caused by excessively high pressure in the circulation pipe 122 or adverse impact of fluid leakage in the circulation pipe 122 on the inside of the wire cable.

Optionally, in a possible implementation, as shown in FIG. 3, the hydraulic buffer apparatus 30 in this embodiment of this application further includes a retractable corrugated structure 330. The corrugated structure 330 is disposed between the opening 310a and the piston 320, to form the first cavity 311. Specifically, the fluid flowing into the hydraulic buffer apparatus 30 causes the corrugated structure 330 to be stretched when the pressure in the circulation pipe 122 is greater than the preset threshold, to push the piston 320 to compress the second cavity 312, to release the pressure in the circulation pipe 122, and reduce damage to the circulation pipe 122 caused by excessively high pressure in the circulation pipe 122 or adverse impact of fluid leakage in the circulation pipe 122 on the inside of the wire cable. In addition, the corrugated structure 330 may be disposed to ensure sealing effect of the first cavity 311, to prevent a fluid in the first cavity 311 from flowing into the second cavity 312.

Optionally, in a possible implementation, as shown in FIG. 3, an elastic component 340 is further disposed inside the second cavity 312 in the hydraulic buffer apparatus 30 in this embodiment of this application, and the elastic component 340 is connected to the piston 320 and a wall that is of the housing 310 and that is opposite to the piston 320. For example, when the wire cable 120 of the charging connector 10 is crushed by a vehicle tire, the pressure in the circulation pipe 122 on a side that is of the wire cable 120 and that faces the charging terminal 110 is high, and the hydraulic buffer apparatus 30 may implement buffering on the fluid in the circulation pipe 122, to reduce damage to the circulation pipe 122 or fluid leakage in the circulation pipe 122. After the vehicle tire leaves the wire cable 120, because of elasticity of the elastic component 340 disposed in the second cavity 312 in the hydraulic buffer apparatus 30, the pressure in the circulation pipe 122 may be restored to normal. This facilitates cyclic use of the hydraulic buffer apparatus 30, and helps improve security and reliability of the charging connector 10.

Optionally, in a possible implementation, the hydraulic buffer apparatus 30 in this embodiment of this application may further include a connection pipe 350, and the connection pipe 350 is connected to the opening 310a and the circulation pipe 122. It should be understood that the hydraulic buffer apparatus 30 in this embodiment of this application may directly communicate with the circulation pipe 122, or may communicate with the circulation pipe 122 through the connection pipe 350.

It should be understood that FIG. 2 and FIG. 3 are merely examples to describe a connection relationship between the charging pile 20 and the charging connector 10, and do not specifically limit connection locations, specific structures, and quantities of the devices. For example, the charging pile 20 in this embodiment of this application may include more or fewer components than those shown in the figure, or combine some of the components, or split some of the components, or have different component arrangements. It should be further understood that the components shown in FIG. 2 and FIG. 3 may be implemented by hardware, software, or a combination of software and hardware. This is not limited in embodiments of this application.

The following describes in detail a working principle of the hydraulic buffer apparatus 30 according to an embodiment of this application with reference to FIG. 4 and FIG. 5. FIG. 4 and FIG. 5 are schematic diagrams of structures of the hydraulic buffer apparatus 30 before and after the wire cable 120 of the charging connector 10 is crushed by the vehicle according to an embodiment of this application.

As shown in FIG. 4 and FIG. 5, the hydraulic buffer apparatus 30 includes the housing 310, the piston 320, the retractable corrugated structure 330, the elastic component 340, and the connection pipe 350. A first end of the connection pipe 350 is connected to the circulation pipe 122, the retractable corrugated structure 330 is disposed at a second end of the connection pipe 350, the corrugated structure 330 is connected to a first end of the piston 320, a second end of the piston 320 is connected to a first end of the elastic component 340, and a second end of the elastic component 340 is connected to a wall that is of the housing 310 and that is opposite to the piston 320. For example, the elastic component in this embodiment of this application may be a spring. As an example, this is not limited in this embodiment of this application.

In a possible implementation, when the wire cable 120 of the charging connector 10 is not crushed by the vehicle tire and the charging connector 10 does not work, as shown in FIG. 4, the retractable corrugated structure 330 in the hydraulic buffer apparatus 30 is in a fully compressed state, the elastic component 340 is in a partially compressed state, and the piston 320 is at a top dead center. When the charging connector 10 is in a normal working state, because some of the fluid in the circulation pipe 122 flows into the hydraulic buffer apparatus 30, that is, the retractable corrugated structure 330 in the hydraulic buffer apparatus 30 is in a partially compressed state, the elastic component 340 is in a partially compressed state, and the piston is at a top dead center.

When the wire cable 120 of the charging connector 10 is crushed by the vehicle tire, as shown in FIG. 5, because the pressure in the circulation pipe 122 increases rapidly in a short period of time, the fluid in the circulation pipe 122 is forced to flow into the hydraulic buffer apparatus 30, so that the corrugated structure 330 is stretched and the piston 320 is pushed to compress the elastic component 340, to buffer the fluid in the circulation pipe 122, and reduce damage to the circulation pipe 122 or fluid leakage in the circulation pipe 122.

In a possible implementation, the inflow pipe 122a in this embodiment of this application may communicate with the hydraulic buffer apparatus 30, or the outflow pipe 122b may communicate with the hydraulic buffer apparatus 30, or both the inflow pipe 122a and the outflow pipe 122b communicate with the hydraulic buffer apparatus 30, so that when the wire cable 120 of the charging connector 10 is crushed by the vehicle tire, the fluid in the circulation pipe 122 may flow into the hydraulic buffer apparatus 30, to buffer the pressure in the circulation pipe 122, to reduce damage to the circulation pipe 122 or fluid leakage in the circulation pipe 122, and improve security and reliability of the charging connector 10 in the charging process.

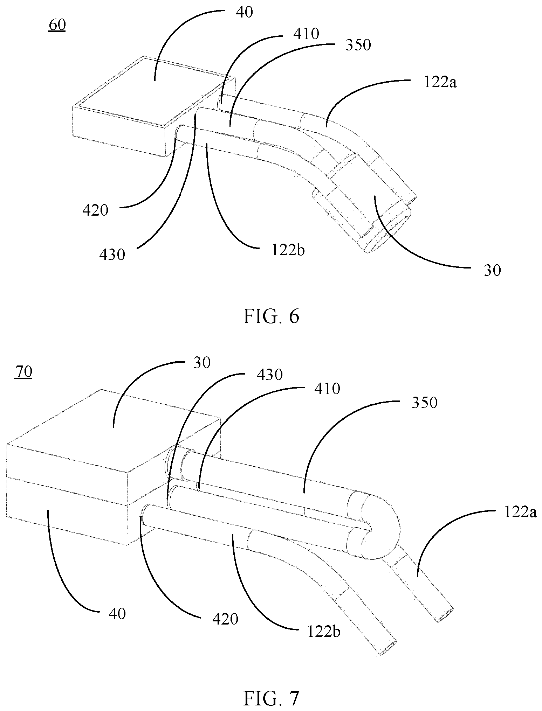

The foregoing describes the structure and the working principle of the hydraulic buffer apparatus. The following describes in detail a specific installation manner of the hydraulic buffer apparatus 30 in the charging connector 10 with reference to FIG. 6 to FIG. 9.

In a possible implementation, as shown in FIG. 6 to FIG. 9, a heat exchange pool 40 may be further disposed in the charging connector 10, one side of the heat exchange pool 40 is attached to the charging terminal 110, and the heat exchange pool 40 is connected to the circulation pipe 122, to facilitate heat dissipation processing on the charging terminal 110.

FIG. 6 is a schematic diagram of an example of a structure 60 in which the hydraulic buffer apparatus 30 is disposed in the charging connector 10 according to an embodiment of this application. For example, the structure 60 shown in FIG. 6 may be disposed inside the connector housing 130 of the charging connector 10 in FIG. 1, or the structure 60 may be disposed at another location of the charging connector 10. This is not limited in this embodiment of this application.

In a possible implementation, the heat exchange pool 40 may be connected to the hydraulic buffer apparatus 30. Specifically, as shown in FIG. 6, the heat exchange pool 40 may include a liquid inlet 410, a liquid outlet 420, and a first interface 430. A first end of the inflow pipe 122a in the circulation pipe 122 is connected to the liquid inlet 410, the outflow pipe 122b in the circulation pipe 122 is connected to the liquid outlet 420, and the hydraulic buffer apparatus 30 communicates with the first interface 430.

It should be understood that, in this embodiment of this application, when the hydraulic buffer apparatus 30 includes the connection pipe 350, the hydraulic buffer apparatus 30 is connected to the first interface 430 of the heat exchange pool 40; or when the connection pipe 350 is not disposed in the hydraulic buffer apparatus 30, the connection pipe 350 may be disposed in the heat exchange pool 40, and the hydraulic buffer apparatus 30 may communicate with the heat exchange pool 40 through the connection pipe 350. In this embodiment of this application, when the connection pipe 350 is disposed in the heat exchange pool 40, the connection pipe 350 may be integrated with the heat exchange pool 40 or connected in another manner. As an example, this is not limited in this embodiment of this application.

It should be further understood that at least one liquid inlet 410 and at least one liquid outlet 420 may be disposed in the heat exchange pool 40 in this embodiment of this application. The at least one liquid inlet 410 is in a one-to-one correspondence with at least one inflow pipe 122a, and the at least one liquid outlet 420 is in a one-to-one correspondence with at least one outflow pipe 122b. Specifically, the at least one inflow pipe 122a that is in a one-to-one correspondence with the at least one liquid inlet 410 and the at least one outflow pipe 122b that is in a one-to-one correspondence with the at least one liquid outlet 420 need to be disposed in the circulation pipe 122.

It should be further understood that at least one first interface 430 may be disposed in the heat exchange pool in this embodiment of this application, and the at least one first interface 430 is in a one-to-one correspondence with at least one hydraulic buffer apparatus 30.

In this embodiment of this application, the first interface 430 is disposed on one side of the heat exchange pool 40 in the charging connector 10, and the first interface 430 communicates with the hydraulic buffer apparatus 30, so that when pressure in the circulation pipe 122 is greater than the preset threshold, the fluid flowing into the hydraulic buffer apparatus 30 buffers the circulation pipe 122, to reduce damage to the circulation pipe 122 caused by excessively high pressure in the circulation pipe 122 or adverse impact of fluid leakage in the circulation pipe 122 on the inside of the wire cable, to improve security and reliability of the charging connector 10. In addition, the structure 60 is simple, and is convenient for processing and assembly of the charging connector 10.

FIG. 7 is a schematic diagram of another example of a structure 70 in which the hydraulic buffer apparatus 30 is disposed in the charging connector 10 according to an embodiment of this application. As shown in FIG. 7, a difference between the structure 70 and the structure 60 shown in FIG. 6 is that the hydraulic buffer apparatus 30 in this embodiment of this application may be disposed as a square mechanism, and may be stacked above the heat exchange pool 40.

It should be understood that the hydraulic buffer apparatus 30 in this embodiment of this application may alternatively be disposed in a cylindrical shape, a square shape, a polygonal shape, or the like, or a shape of the hydraulic buffer apparatus 30 may be determined based on a shape of the heat exchange pool 40. As an example, this is not limited in this embodiment of this application.

It should be further understood that, in this embodiment of this application, when the hydraulic buffer apparatus 30 includes the connection pipe 350, the hydraulic buffer apparatus 30 may be directly connected to the first interface 430 of the heat exchange pool 40; or when the connection pipe 350 is not disposed in the hydraulic buffer apparatus 30, the connection pipe 350 may be disposed at an end of the heat exchange pool 40, and the hydraulic buffer apparatus 30 may communicate with the heat exchange pool 40 through the connection pipe 350. In this embodiment of this application, when the connection pipe 350 is disposed in the heat exchange pool 40, the connection pipe 350 may be integrated with the heat exchange pool 40 or connected in another manner. As an example, this is not limited in this embodiment of this application.

In this embodiment of this application, the hydraulic buffer apparatus 30 is disposed as a square structure, and is stacked above the heat exchange pool 40, so that the hydraulic buffer apparatus 30 is installed in the heat exchange connector 10, and space utilization inside the connector 130 of the charging connector 10 may be improved.

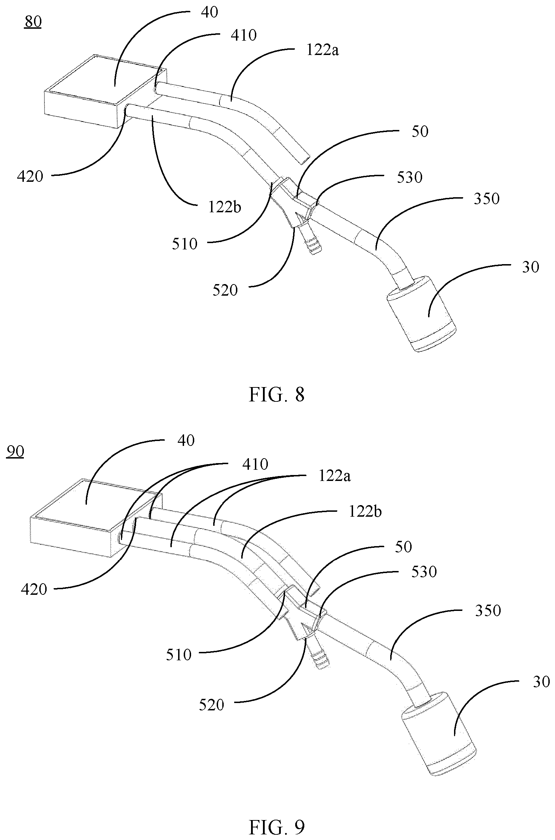

FIG. 8 is a schematic diagram of another example of a structure 80 in which the hydraulic buffer apparatus 30 is disposed in the charging connector 10 according to an embodiment of this application. As shown in FIG. 8, a three-way adapter 50 may be disposed in the outflow pipe 122b in the circulation pipe 122, a first segment 510 of the three-way adapter 50 communicates with the heat exchange pool 40, a second end 520 of the three-way adapter 50 may communicate with the cold source apparatus 220 of the pile body 20, and a third end 530 of the three-way adapter 50 communicates with the hydraulic buffer apparatus 30.

It should be understood that the three-way adapter 50 in this embodiment of this application may communicate with the inflow pipe 122a and/or the outflow pipe 122b in the circulation pipe 122. For example, the three-way adapter 50 may be disposed in the inflow pipe 122a in the circulation pipe 122, or the three-way adapter 50 may be disposed in the outflow pipe 122b in the circulation pipe 122, or the three-way adapter 50 may be separately disposed in the inflow pipe 122a and the outflow pipe 122b in the circulation pipe 122.

In this embodiment of this application, the three-way adapter 50 is disposed in the inflow pipe 122a and/or the outflow pipe 122b in the circulation pipe 122 to communicate with the hydraulic buffer apparatus 30, so that when the pressure in the circulation pipe 122 is greater than the preset threshold, the fluid flowing into the hydraulic buffer apparatus 30 may buffer the circulation pipe 122, to reduce damage to the circulation pipe 122 caused by excessively high pressure in the circulation pipe 122 or adverse impact of fluid leakage in the circulation pipe 122 on the inside of the wire cable, to improve security and reliability of the charging connector 10 in the charging process. In addition, the structure design is simple, and there is no need to affect the structure of the heat exchange pool 40.

FIG. 9 is a schematic diagram of another example of a structure 90 in which the hydraulic buffer apparatus 30 is disposed in the charging connector 10 according to an embodiment of this application. As shown in FIG. 9, the circulation pipe 122 includes two inflow pipes 122a and one outflow pipe 122b. A three-way adapter 50 may be disposed in the outflow pipe 122b in the circulation pipe 122, a first segment 510 of the three-way adapter 50 communicates with the heat exchange pool 40, a second end 520 of the three-way adapter 50 may communicate with the cold source apparatus 220 of the pile body 20, and a third end 530 of the three-way adapter 50 communicates with the hydraulic buffer apparatus 30.

In a possible implementation, the three-way adapter 50 may be further disposed in the inflow pipe 122a. Specifically, as shown in FIG. 9, the three-way adapter may be disposed in either of the two inflow pipes 122a, or the three-way adapter 50 may be separately disposed in the two inflow pipes 122a.

It should be understood that quantities of inflow pipes 122a and outflow pipes 122b in the circulation pipe 122 in this embodiment of this application may be set according to an actual requirement. For example, the quantities of inflow pipes 122a and outflow pipes 122b in the circulation pipe 122 may be set based on quantities of liquid inlets 410 and liquid outlets 420 of the heat exchange pool 40. In this embodiment of this application, at least one liquid inlet 410 of the heat exchange pool 40 is in a one-to-one correspondence with at least one inflow pipe 122a in the circulation pipe 122, and at least one liquid outlet 410 of the heat exchange pool 40 is in a one-to-one correspondence with at least one outflow pipe 122b in the circulation pipe 122.

In a possible implementation, the at least one liquid inlet 410 and the at least one liquid outlet 420 may be disposed on a side that is of the heat exchange pool 40 and that is away from the charging terminal 110 in this embodiment of this application. The at least one liquid inlet 410 is in a one-to-one correspondence with the at least one inflow pipe 122a, and the at least one liquid outlet 420 is in a one-to-one correspondence with the at least one outflow pipe 122b. In this embodiment of this application, the three-way adapter 50 is disposed in the at least one inflow pipe 122a and/or the at least one outflow pipe 122b in the circulation pipe 122 to communicate with the hydraulic buffer apparatus 30, so that when the pressure in the circulation pipe 122 is greater than the preset threshold, the fluid flowing into the hydraulic buffer apparatus 30 may effectively buffer the circulation pipe 122, to reduce damage to the circulation pipe 122 caused by excessively high pressure in the circulation pipe 122 or adverse impact of fluid leakage in the circulation pipe 122 on the inside of the wire cable 120, to improve security and reliability of the charging connector 10 in the charging process. In addition, the at least one inflow pipe 122a and the at least one outflow pipe 122b are disposed in the circulation pipe 122 in the charging connector 10, so that heat exchange efficiency of the fluid in the circulation pipe 122 may be accelerated, to improve heat dissipation effect of the charging terminal 110.

The terms used in the foregoing embodiments are merely intended to describe specific embodiments, but are not intended to limit embodiments of this application. The terms "one", "a", "the", "the foregoing", "this", and "the one" of singular forms used in this specification and the appended claims of this application are also intended to include forms such as "one or more", unless otherwise specified in the context clearly.

Reference to "an embodiment", "some embodiments", or the like described in embodiments of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in embodiments of this application do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

It should be further understood that, in embodiments of this application, "at least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one (piece) of a, b, and c may indicate a, b, c, a and b, a and c, b and c, or a, b, and c. Each of a, b, and c may be in a singular form or a plural form.

It should be understood that, in the embodiments shown above, "first", "second", "third", "fourth", and various numerical numbers are merely used for distinguishing for ease of description, but are not used to limit the scope of embodiments of this application. Specifically, "first", "second", and the like are merely intended for a purpose of description, and shall not be understood as an indication or implication of relative importance or implicit indication of a quantity of indicated technical features. Therefore, a feature limited by "first ", "second" and the like may explicitly indicate or implicitly include one or more such features.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A charging connector (10), comprising a charging terminal (110), a cable (121) and a circulation pipe (122), wherein
the charging terminal (110) is connected to the cable (121);
the circulation pipe (122) is configured to communicate with a cold source apparatus (220) to form a cooling loop; **characterized in that**
the charging connector (10) further comprises, a hydraulic buffer apparatus (30), wherein the hydraulic buffer apparatus (30) communicates with the circulation pipe (122), and the hydraulic buffer apparatus (30) is configured to relieve pressure in the circulation pipe (122) when the pressure in the circulation pipe (122) is greater than a preset threshold.

2. The charging connector (10) according to claim 1, wherein the circulation pipe (122) comprises an inflow pipe ( 122a) and an outflow pipe ( 122b); and the inflow pipe ( 122a) communicates with the hydraulic buffer apparatus (30), or the outflow pipe ( 122b) communicates with the hydraulic buffer apparatus (30), or both the inflow pipe ( 122a) and the outflow pipe ( 122b) communicate with the hydraulic buffer apparatus (30).

3. The charging connector (10) according to claim 1 or 2, further comprising a heat exchange pool (40), wherein the heat exchange pool (40) is attached to the charging terminal (110), and the heat exchange pool (40) is connected to the circulation pipe (122).

4. The charging connector (10) according to claim 3, wherein the heat exchange pool (40) is connected to the hydraulic buffer apparatus (30).

5. The charging connector (10) according to any one of claims 2 to 4, wherein a three-way adapter (50) is disposed in the inflow pipe ( 122a) and/or the outflow pipe ( 122b), a first end of the three-way adapter (50) communicates with the heat exchange pool (40), a second end (520) of the three-way adapter (50) communicates with the cold source apparatus (220), and a third end (530) of the three-way adapter (50) communicates with the hydraulic buffer apparatus (30).

6. The charging connector (10) according to any one of claims 3 to 5, wherein at least one liquid inlet (410) and at least one liquid outlet (420) are disposed on a side that is of the heat exchange pool (40) and that is away from the charging terminal (110), the at least one liquid inlet (410) is in a one-to-one correspondence with at least one inflow pipe ( 122a), and the at least one liquid outlet (420) is in a one-to-one correspondence with at least one outflow pipe ( 122b).

7. The charging connector (10) according to any one of claims 1 to 6, wherein the hydraulic buffer apparatus (30) comprises a piston and a housing (310) having an opening ( 310a), the housing (310) comprises a first cavity (311) and a second cavity (312), the piston is disposed in the housing (310) and is located between the first cavity (311) and the second cavity (312), a fluid in the circulation pipe (122) enters the first cavity (311) through the opening ( 310a), and the fluid pushes the piston to compress the second cavity (312) when the pressure in the circulation pipe (122) is greater than the preset threshold.

8. The charging connector (10) according to claim 7, wherein the hydraulic buffer apparatus (30) further comprises a retractable corrugated structure (330), and the corrugated structure (330) is disposed between the opening ( 310a) and the piston to form the first cavity (311).

9. The charging connector (10) according to claim 7 or 8, wherein an elastic component (340) is disposed in the second cavity (312), and the elastic component (340) is connected to the piston and a wall that is of the housing (310) and that is opposite to the piston.

10. The charging connector (10) according to any one of claims 1 to 9, further comprising a pump body, wherein the pump body communicates with the circulation pipe (122), and the pump body is configured to drive the fluid to flow in the circulation pipe (122).

11. A charging pile (20), comprising a pile body and a charging connector (10) according to one of the previous claims, wherein the charging connector (10) is electrically connected to the pile body through the cable (121).

## Patentansprüche

1. Ladesteckverbinder (10), umfassend einen Ladeanschluss (110), ein Kabel (121) und eine Zirkulationsleitung (122), wobei der Ladeanschluss (110) mit dem Kabel (121) verbunden ist;
die Zirkulationsleitung (122) dazu konfiguriert ist, mit einer Kältequellenvorrichtung (220) zu kommunizieren, um einen Kühlkreislauf zu bilden; **dadurch gekennzeichnet, dass** der Ladesteckverbinder (10) ferner eine hydraulische Puffervorrichtung (30) umfasst, wobei die hydraulische Puffervorrichtung (30) mit der Zirkulationsleitung (122) kommuniziert und die hydraulische Puffervorrichtung (30) dazu konfiguriert ist, einen Druck in der Zirkulationsleitung (122) abzubauen, wenn der Druck in der Zirkulationsleitung (122) größer als ein voreingestellter Schwellenwert ist.

2. Ladesteckverbinder (10) nach Anspruch 1, wobei die Zirkulationsleitung (122) eine Zuflussleitung (122a) und eine Abflussleitung (122b) umfasst; und die Zuflussleitung (122a) mit der hydraulischen Puffervorrichtung (30) kommuniziert oder die Abflussleitung (122b) mit der hydraulischen Puffervorrichtung (30) kommuniziert oder sowohl die Zuflussleitung (122a) als auch die Abflussleitung (122b) mit der hydraulischen Puffervorrichtung (30) kommunizieren.

3. Ladesteckverbinder (10) nach Anspruch 1 oder 2, ferner umfassend ein Wärmetauscherbecken (40), wobei das Wärmetauscherbecken (40) an dem Ladeanschluss (110) befestigt ist und das Wärmetauscherbecken (40) mit der Zirkulationsleitung (122) verbunden ist.

4. Ladesteckverbinder (10) nach Anspruch 3, wobei das Wärmetauscherbecken (40) mit der hydraulischen Puffervorrichtung (30) verbunden ist.

5. Ladesteckverbinder (10) nach einem der Ansprüche 2 bis 4, wobei ein Dreiwegeadapter (50) in der Zuflussleitung (122a) und/oder der Abflussleitung (122b) angeordnet ist, ein erstes Ende des Dreiwegeadapters (50) mit dem Wärmetauscherbecken (40) kommuniziert, ein zweites Ende (520) des Dreiwegeadapters (50) mit der Kältequellenvorrichtung (220) kommuniziert und ein drittes Ende (530) des Dreiwegeadapters (50) mit der hydraulischen Puffervorrichtung (30) kommuniziert.

6. Ladesteckverbinder (10) nach einem der Ansprüche 3 bis 5, wobei mindestens ein Flüssigkeitseinlass (410) und mindestens ein Flüssigkeitsauslass (420) an einer Seite des Wärmetauscherbeckens (40), die von dem Ladeanschluss (110) entfernt ist, angeordnet sind, wobei der mindestens eine Flüssigkeitseinlass (410) in einer Eins-zu-eins-Entsprechung mit mindestens einer Zuflussleitung (122a) steht und der mindestens eine Flüssigkeitsauslass (420) in einer Eins-zu-eins-Entsprechung mit mindestens einer Abflussleitung (122b) steht.

7. Ladesteckverbinder (10) nach einem der Ansprüche 1 bis 6, wobei die hydraulische Puffervorrichtung (30) einen Kolben und ein Gehäuse (310), das eine Öffnung (310a) aufweist, umfasst, das Gehäuse (310) einen ersten Hohlraum (311) und einen zweiten Hohlraum (312) umfasst, der Kolben in dem Gehäuse (310) angeordnet ist und sich zwischen dem ersten Hohlraum (311) und dem zweiten Hohlraum (312) befindet, ein Fluid in der Zirkulationsleitung (122) durch die Öffnung (310a) in den ersten Hohlraum (311) eintritt und das Fluid den Kolben drückt, um den zweiten Hohlraum (312) zu komprimieren, wenn der Druck in der Zirkulationsleitung (122) größer als der voreingestellte Schwellenwert ist.

8. Ladesteckverbinder (10) nach Anspruch 7, wobei die hydraulische Puffervorrichtung (30) ferner eine einziehbare gewellte Struktur (330) umfasst und die gewellte Struktur (330) zwischen der Öffnung (310a) und dem Kolben angeordnet ist, um den ersten Hohlraum (311) zu bilden.

9. Ladesteckverbinder (10) nach Anspruch 7 oder 8, wobei eine elastische Komponente (340) in dem zweiten Hohlraum (312) angeordnet ist und die elastische Komponente (340) mit dem Kolben und einer Wand des Gehäuses (310), die dem Kolben gegenüberliegt, verbunden ist.

10. Ladesteckverbinder (10) nach einem der Ansprüche 1 bis 9, ferner umfassend einen Pumpenkörper, wobei der Pumpenkörper mit der Zirkulationsleitung (122) kommuniziert und der Pumpenkörper dazu konfiguriert ist, das Fluid dazu anzutreiben, in der Zirkulationsleitung (122) zu fließen.

11. Ladesäule (20), umfassend einen Säulenkörper und einen Ladesteckverbinder (10) nach einem der vorhergehenden Ansprüche, wobei der Ladesteckverbinder (10) über das Kabel (121) elektrisch mit dem Säulenkörper verbunden ist.

## Revendications

1. Connecteur de charge (10), comprenant une borne de charge (110), un câble (121) et un tuyau de circulation (122), dans lequel la borne de charge (110) est connectée au câble (121) ;
le tuyau de circulation (122) est configuré pour communiquer avec un appareil de source froide (220) pour former une boucle de refroidissement ; **caractérisé en ce que**
le connecteur de charge (10) comprend également, un appareil tampon hydraulique (30), dans lequel l'appareil tampon hydraulique (30) communique avec le tuyau de circulation (122), et l'appareil tampon hydraulique (30) est configuré pour soulager la pression dans le tuyau de circulation (122) lorsque la pression dans le tuyau de circulation (122) est supérieure à un seuil prédéfini.

2. Connecteur de charge (10) selon la revendication 1, dans lequel le tuyau de circulation (122) comprend un tuyau d'entrée (122a) et un tuyau de sortie (122b) ; et le tuyau d'entrée (122a) communique avec l'appareil tampon hydraulique (30), ou le tuyau de sortie (122b) communique avec l'appareil tampon hydraulique (30), ou les tuyaux d'entrée (122a) et de sortie (122b) communiquent tous deux avec l'appareil tampon hydraulique (30).

3. Connecteur de charge (10) selon la revendication 1 ou 2, comprenant également un bassin d'échange de chaleur (40), dans lequel le bassin d'échange de chaleur (40) est fixé à la borne de charge (110), et le bassin d'échange de chaleur (40) est connecté au tuyau de circulation (122).

4. Connecteur de charge (10) selon la revendication 3, dans lequel le bassin d'échange de chaleur (40) est connecté à l'appareil tampon hydraulique (30).

5. Connecteur de charge (10) selon l'une quelconque des revendications 2 à **4,** dans lequel un adaptateur à trois voies (50) est disposé dans le tuyau d'entrée (122a) et/ou le tuyau de sortie (122b), une première extrémité de l'adaptateur à trois voies (50) communique avec le bassin d'échange de chaleur (40), une deuxième extrémité (520) de l'adaptateur à trois voies (50) communique avec l'appareil source de froid (220), et une troisième extrémité (530) **de l'adaptateur** à trois voies (50) communique avec **l'appareil** tampon hydraulique (30).

6. Connecteur de charge (10) selon l'une quelconque des revendications 3 à **5,** dans lequel au moins une entrée de liquide (410) et au moins une sortie de liquide (420) sont disposées sur un côté qui est du bassin **d'échange** de chaleur (40) et qui est éloigné de la borne de charge (110), l'au moins une entrée de liquide (410) est en correspondance biunivoque avec au moins un tuyau d'entrée (122a), et l'au moins une sortie de liquide (420) est en correspondance biunivoque avec au moins un tuyau de sortie (122b) .

7. Connecteur de charge (10) selon l'une quelconque des revendications 1 à **6,** dans lequel **l'appareil** tampon hydraulique (30) comprend un piston et un boîtier (310) ayant une ouverture (310a), le boîtier (310) comprend une première cavité (311) et une seconde cavité (312), le piston est disposé dans le boîtier (310) et est situé entre la première cavité (311) et la seconde cavité (312), un fluide dans le tuyau de circulation (122) pénètre dans la première cavité (311) par l'intermédiaire de l'ouverture (310a), et le fluide pousse le piston pour comprimer la seconde cavité (312) lorsque la pression dans le tuyau de circulation (122) est supérieure au seuil prédéfini.

8. Connecteur de charge (10) selon la revendication **7,** dans lequel l'appareil tampon hydraulique (30) comprend également une structure ondulée rétractable (330), et la structure ondulée (330) est disposée entre l'ouverture (310a) et le piston pour former la première cavité (311).

9. Connecteur de charge (10) selon la revendication 7 ou **8,** dans lequel un composant élastique (340) est disposé dans la seconde cavité (312), et le composant élastique (340) est connecté au piston et à une paroi qui est du boîtier (310) et qui est opposée au piston.

10. Connecteur de charge (10) selon l'une quelconque des revendications 1 à **9,** comprenant également un corps de pompe, dans lequel le corps de pompe communique avec le tuyau de circulation (122), et le corps de pompe est configuré pour entraîner le fluide à s'écouler dans le tuyau de circulation (122).

11. Pile de charge (20), comprenant un corps de pile et un connecteur de charge (10) selon l'une des revendications précédentes, dans laquelle le connecteur de charge (10) est connecté électriquement au corps de pile par l'intermédiaire du câble (121).
